# EUROPEAN PATENT APPLICATION

(11) **EP 4 170 482 A1**
(43) Date of publication of application: **26.04.2023**
(21) Application number: 21204421.8
(22) Date of filing: 25.10.2021
(51) Int. Cl.: G06F 8/35, G06F 8/41

(54) **DEPLOYMENT OF MACHINE LEARNED MODELS TO PLURALITY OF DEVICES**

(71) Applicant: Scailable B.V., 6524 LK Nijmegen (NL)
(72) Inventor: VAN EMDEN, Robin Alfred, 2562 XC Den Haag (NL); KAPTEIN, Maurits Clemens, 6524 LK Nijmegen (NL)
(74) Representative: DeltaPatents B.V.

(57) **Abstract**

A system and method are provided for converting a machine learned model into a format which is executable by a runtime interpreter on a plurality of different types of devices. For that purpose, a representation of the machine learned model 100 may be provided in form of a computational graph. The computational graph may be parsed 300 to identify operations of the machine learned model and data relations between the operations. Code may be dynamically generated 320 by including functions from a library which represent the operations of the computational graph and by generating execution logic which calls the functions in accordance with the data relations in the computational graph. The code 140 may be compiled 340 to obtain a binary intermediate representation 160 which may be easily deployed to a plurality of different types of devices and which may avoid the computational load and memory allocation associated with directly executing a machine learned model defined in a high-level programming language or using model training tools.

## Description

### FIELD OF THE INVENTION

The invention relates to a system and computer-implemented method for enabling deployment of a machine learned model to a plurality of different types of devices. The invention further relates to a computer-readable medium comprising instructions arranged to cause a processor system to perform the computer-implemented method, and to a computer-readable medium comprising an application generated by the system or method.

### BACKGROUND OF THE INVENTION

Machine learning is nowadays finding widespread use, after being confined to the research stage for many years. For example, in industry, machine learning may be used to assist in the design of products, to identify defects during the manufacture of products, to control warehouse robots to find efficient paths in warehouses, etc. However, machine learning is also increasingly deployed with consumers. For example, a smart doorbell may employ machine learning to recognize a home's visitors, and the car may employ machine learning in driver assistance systems to detect traffic signs, other road users, etc.

Various tools and libraries are available to enable machine learnable models to be defined and to be learned (i.e., trained) on data. Typically, such machine learnable models are created in high-level programming languages or using model training tools (such as PyTorch, TensorFlow, Scikit-Learn). Disadvantageously, such machine learned models may not be well-suited to be deployed on devices, particularly on devices which have limited compute and storage resources, such as Internet of Things (loT) devices. An example of such loT devices are so-called edge devices, such as routers and switches.

A reason for such machine learned models not being well-suited to be deployed on devices is that high-level programming languages and model training tools may use many abstractions, which - while making these tools easy to use - makes their runtime execution inefficient, both computationally and in terms of memory. It is possible to compile such machine learnable models directly to a target platform to avoid the inefficiencies of runtime execution. Disadvantageously, such compilation often requires the machine learnable model to be built specifically for a type of target device, and typically requires user involvement, e.g., optimization by a programmer. There are many types of different devices, in terms of architectures, e.g., x86 vs. ARM, 32-bit vs. 64-bit, memory architecture, hardware accelerators, etc. It is therefore cumbersome to deploy a machine learnable model to different types of devices.

It would be desirable to enable machine learned models to be more easily and efficiently deployed to different types of devices, e.g., involving different types of architectures.

### SUMMARY OF THE INVENTION

In accordance with a first aspect of the invention, a computer-implemented method is provided for enabling deployment of a machine learned model to a plurality of different types of devices. The method comprises:
providing a representation of the machine learned model in form of a computational graph, wherein nodes of the computational graph define operations of the machine learned model and edges of the computational graph define data relations between the operations;
converting the machine learned model to a binary intermediate representation which is executable by a runtime interpreter on the plurality of different types of devices by:
   - providing a library of templates defining functions in a programming language which can be compiled to the binary intermediate representation, wherein each function represents an implementation of a possible operation defined by the computational graph;
   - parsing the computational graph to identify the operations of the machine learned model and the data relations between the operations;
   - dynamically generating code representing the machine learned model by including functions from the library which represent the operations of the computational graph and by generating execution logic which calls the functions in accordance with the data relations between the operations in the computational graph;
   - compiling the code to obtain the binary intermediate representation of the machine learned model for execution by the runtime interpreter.

In accordance with a further aspect of the invention, a system is provided for enabling deployment of a machine learned model to a plurality of different types of devices. The system comprises:
a data storage interface for accessing a representation of the machine learned model in form of a computational graph, wherein nodes of the computational graph define operations of the machine learned model and edges of the computational graph define data relations between the operations;
a processor subsystem configured to:
   - convert the machine learned model to a binary intermediate representation which is executable by a runtime interpreter on the plurality of different types of devices by:
   - provide a library of templates defining functions in a programming language which can be compiled to a binary instruction format, wherein each function represents an implementation of a possible operation defined by the computational graph;
   - parse the computational graph to identify the operations of the machine learned model and the data relations between the operations;
   - dynamically generate code representing the machine learned model by including functions from the library which represent the operations of the computational graph and by generating execution logic which calls the functions in accordance with the data relations between the operations in the computational graph;
   - compile the code to obtain the binary intermediate representation of the machine learned model for execution by the runtime interpreter.

In accordance with a further aspect of the invention, a transitory or non-transitory computer-readable medium may be provided comprising data, wherein the data may comprise instructions arranged to cause a processor system to perform any computer-implemented method as defined in this specification.

The above measures involve providing a machine learnable model in form of a computational graph. Such computational graphs are known per se, and typically represented by a directed graph comprised of nodes and edges between nodes. The nodes may define computational operations, which may typically be mathematical operations (e.g., simple operations such as additions, subtractions, and multiplications, but also more complex operation such as convolutions or nonlinear functions). In general, such operations may also be referred to as functions, and may accept an input and produce an output. The edges between the nodes may define data relations between the nodes, meaning that they may define input-output relations between nodes, e.g., which node's output is directed to which node's input. It is also known to define machine learnable models in form of such computational graphs. For example, layers of a neural network may be represented by nodes which may define operations such as convolutions and activation functions. A machine learnable model for example may be defined as a computational graph in a language which may be both human- and computer-readable, such as a markup language such as XML. An example of a language and file format for machine learning models is the ONXX format, e.g., as described on and available from https://github.com/onnx/onnx.

A machine learnable model may be trained on the basis of its definition as a computational graph. The parameters of the machine learnable model, such as weights and hyperparameters of a neural network, may after training be written to the same file(s) that define the computational graph, or in different file(s) but which may be linked to the computational graph. After training, a machine learnable model may also be referred to as a machine 'learned' model. It will be appreciated, however, that a machine learned model may again be trained, e.g., on new data, and thus may still be considered to be 'learnable'. In this specification, references to machine learnable models may thus includes models which have already been (partially) trained, i.e., machine learned models, while references to machine learned models may not exclude that these models may be again trained, e.g., on new data.

Disadvantageously, machine learned models as computational graphs may be difficult execute at runtime, as they may, due to the number of abstractions, require significant compute and memory resources, as also elucidated in the background section.

In accordance with the above measures, a library of templates may be provided which may define, for each or at least a sizable set of possible operations defined by a computational graph, a function in a programming language which may be compiled to a binary intermediate representation. This may be explained as follows: a computational graph may, when defining a machine learnable model, allow different types of operations to be used. For each of these operations, or at least for a sizable set of operations which may be considered to be supported by the claimed system and method, a function may be defined in the programming language. This function may represent a template, in that it may define the function, but may comprise parameters which allow the function to be adapted to parameters of the particular operation defined in the computational graph. For example, if an operation defines an activation function with a particular threshold, the function in the programming language may define a nonlinear activation function which allows the threshold to be specified. A template may thus allow certain parameters to be specified.

The above measures may parse the computational graph to identify the operations of the machine learned model and to identify the data relations between the operations and dynamically generate code for the machine learned model, namely by translating operations of the computational graph into functions, and by generating execution logic, for example in form of a 'main' function, which calls the functions representing the computational graph's operations in a manner which corresponds to the order of execution of operations in the computational graph and the input-output relations between operations. This way, the computational graph may be converted into compilable code, e.g., in form of a main function and separate callable functions for the operations of the computational graph.

The code may then be compiled, e.g., using a compiler for the particular programming language, to obtain the binary intermediate representation of the machine learned model for execution. Here, the term 'intermediate representation' may refer to a representation which may be intended for execution on an abstract machine, such as a virtual machine, rather than a specific type of hardware processor, e.g., as also elucidated https://en.wikipedia.org/wiki/Intermediate representation. In particular, the code may be compilable to a binary intermediate representation which may be executable at runtime by a binary interpreter, i.e., a software component running on a target device. Thus, instead of compiling the code to low-level machine language for a particular hardware processor, e.g., an ARM processor, the code is compiled to be executable at runtime by software.

The above measures have the effect that a machine learned model may easily be deployed to a plurality of different types of devices, while avoiding the computational load and memory allocation which is associated with directly executing a machine learned model defined in a high-level programming language or using model training tools. Namely, while it is feasible to execute such machine learned models directly at runtime, the computational load and memory allocation is relatively high due to the many abstractions used in the definition of the machine learned model. The same time, it is avoided that a device-type-specific machine learned model is created, which may be the case when directly compiling a machine learned model to a target platform, e.g., to obtain machine language for this target platform. Instead, the machine learned model is compiled to a binary intermediate representation which may be executed by a software-based runtime interpreter. Such a runtime interpreter may be a separate piece of software, which may once be ported over to different target platforms, e.g., to different devices, device architectures and/or operating systems. Once such a runtime interpreter is available for a target platform, it may be used to execute any machine learned model created by the system and method as claimed. A particular machine learned model thus does not have to be compiled to the machine language of a processor of a specific target platform. At the same time, the performance of executing such a machine learned model may be (significantly) higher than that of at runtime interpreting a machine learned model defined in a high-level programming language or defined using model training tools. Namely, such a binary representation is at a lower level than the machine learned model defined in the high-level programming language or using model training tools. In particular, by being a binary representation, a need for abstractions to make code human-readable may be omitted, which may improve performance. The binary representation may thus be 'intermediate' between machine language and a high-level language. For example, the binary representation may be a representation in an assembly language which may at runtime be interpreted by the runtime interpreter and converted to the machine language of a device's specific processor.

As elucidated above, given the many types of target platforms on which machine learned models may be deployed, such an intermediate representation provides flexibility as it may only require a runtime interpreter to be available on the target platform. Still, the performance of such a machine learnable model may be (significantly) better than that of machine learnable models defined in high-level programming languages or the like.

Optionally, parsing the computational graph comprises verifying a validity of the computational graph before dynamically generating the code. This way, it may be ensured that the code generated by the system and method is correctly executable.

Optionally, the processor subsystem is further configured for, and the method further comprises, generating an application for a specific type of a device, wherein the application includes the runtime interpreter and includes, or is configured to access, the binary intermediate representation of the machine learned model. By generating such an application, the runtime interpreter may be provided to a target device in executable form, and in such a way that the runtime interpreter may be able to access the machine learned model. For example, as also elucidated elsewhere, the machine learned model may be included in the application, or the application may be configured to retrieve the machine learned model from elsewhere, for example via network from an online server.

Optionally, the application is configured to establish a sandbox for execution of the binary intermediate representation of the machine learned model on the device. For security purposes, the binary intermediate representation may run in a so-called sandbox. This may facilitate the adoption of deployed machine learned models, as executing such machine learned models may not, or only to a limited degree, pose a security risk.

Optionally, the application is configured to provide a linear memory space which is accessible from inside and outside of the sandbox to enable the binary intermediate representation of the machine learned model to access a peripheral or hardware accelerator of the device by writing data to and/or reading data from the linear memory space.

While the execution from within a sandbox provides security, it may be desirable to have the machine learned model be able to access certain external data, such as input data from a peripheral, or to output data to a peripheral, or to make use of hardware accelerators of the device. For that purpose, the application may provide a linear memory space which may act as a limited pass-through for data to and from the machine learned model. This may enable a machine learned model, which may not be able to directly access peripherals and hardware accelerators of the device, to still obtain access to those.

Optionally, the peripheral comprises a sensor, and the application is configured to:
- read sensor data from the peripheral; and
- write the sensor data to the linear memory space to be accessible by the binary intermediate representation of the machine learned model.

A machine learned model may be used to process sensor data. For example, a machine learned model may be used to count people in video data which is acquired by a camera directed at a busy intersection, or to filter audio data obtained from a microphone to remove background noise, or to estimate trends in environmental sensor data (e.g., pollution data or weather data). By providing the machine learned model access to sensor data of such peripherals, various types of machine learning applications may be enabled.

Optionally, the processor subsystem is further configured for, and the method further comprises, making the application available for download via an online platform, wherein the application is configured to assign a unique device identifier to the device and register with the online platform using the unique device identifier. By making the application downloadable, the application may be easily loaded onto a target device. In addition, by having the application register with the online platform, the devices which are ready for deployment of machine learned models may be made known to the online platform. This may allow central management of such devices using the online platform.

Optionally, the processor subsystem is further configured for, and the method further comprises, enabling a user to, via the online platform, assign one or more machine learned models to the device, wherein said assignment is based on the unique device identifier, and wherein the application is configured to retrieve the binary intermediate representation of any machine learned model which is assigned to the device from the online platform. Since the online platform may be aware of devices which are available for the deployment of machine learned models, e.g., by way of the aforementioned registration, the online platform may be used to assign machine learned models to devices. In particular, the application may be configured to retrieve any of such assigned machine learned models, e.g., through the application periodically checking with the online platform for newly assigned models, e.g., through a pull-type of interaction, or by the online platform pushing such machine learned models to devices. This way, newly assigned machine learned models may be automatically loaded onto devices to which they are assigned. This functionality may facilitate the deployment of machine learned models to a large number of devices.

In a further aspect of the invention, a transitory or non-transitory data computer-readable medium is provided, wherein the computer-readable medium comprises data representing an application generated by any computer-implemented method described in this specification.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows an example of an operation defined as a computational graph;
Fig. 2 shows an example of a machine learnable model in form of a multi-layer neural network, which model is defined as a computational graph;
Fig. 3 illustrates a process of converting a machine learned model defined as a computational graph to a binary intermediate representation which is executable by a runtime interpreter on a plurality of different types of devices;
Fig. 4 shows an application which is generated for a specific type of device, which application comprises a runtime interpreter for the type of device and comprises, or is configured to access, a binary intermediate representation of a machine learned model;
Fig. 5 shows the deployment of machine learned models to different devices and to different types of devices via an online platform, with the online platform having access to machine learned models which are generated by a compile server;
Fig. 6 shows a processor system which may represent a compile server, an online platform host, a device to which a machine learned model is to be deployed, etc.
Fig. 7 shows a computer-readable medium comprising data.

It should be noted that the figures are purely diagrammatic and not drawn to scale. In the figures, elements which correspond to elements already described may have the same reference numerals.

### List of reference numbers and abbreviations

The following list of reference numbers is provided for facilitating the interpretation of the drawings and shall not be construed as limiting the claims.
- 80: operation defined as computational graph
- 100, 102: machine learnable model defined as computational graph
- 120: template library
- 140: code
- 160: binary intermediate representation
- 180: runtime interpreter

- 200: application
- 220: linear memory
- 240: peripheral
- 260: hardware accelerator

- 300: parse machine learnable model defined as computational graph
- 320: dynamically generate code to represent model
- 340: compile code to binary intermediate representation

- 400: compile server
- 420: online platform host
- 440: database
- 460: network, e.g., the Internet
- 480-484: device

- 500: processor system
- 510: processing subsystem
- 520: data storage interface
- 530: data storage
- 540: peripheral interface
- 550: peripheral
- 560: network interface
- 570: network

- 600: computer-readable medium
- 620: non-transitory data

### DETAILED DESCRIPTION OF EMBODIMENTS

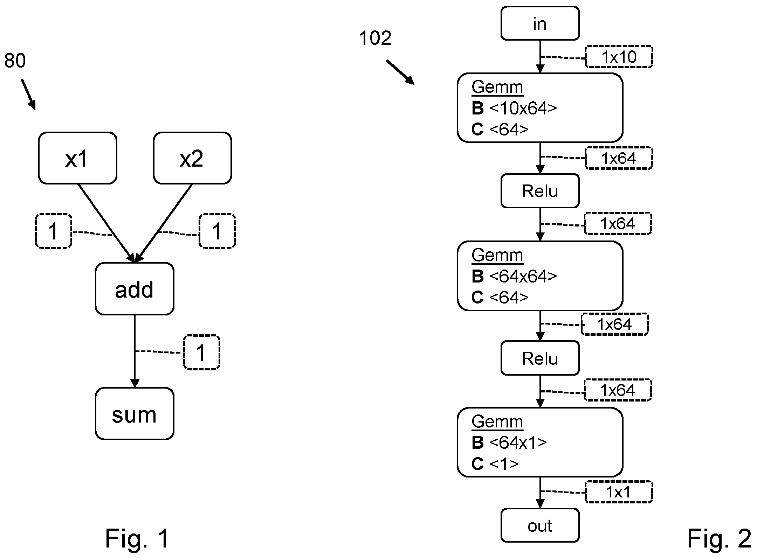

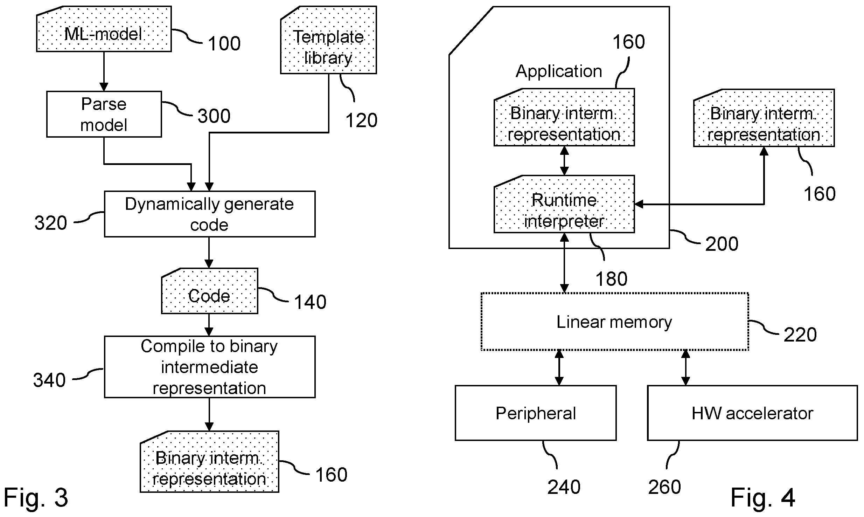

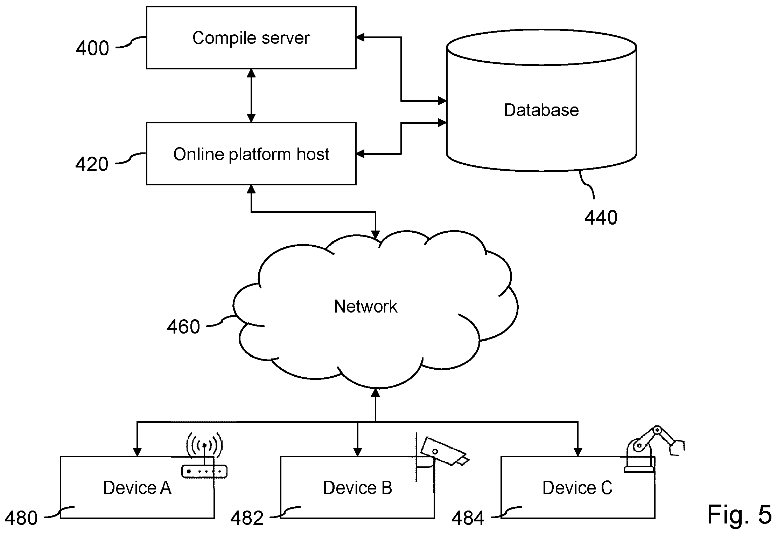

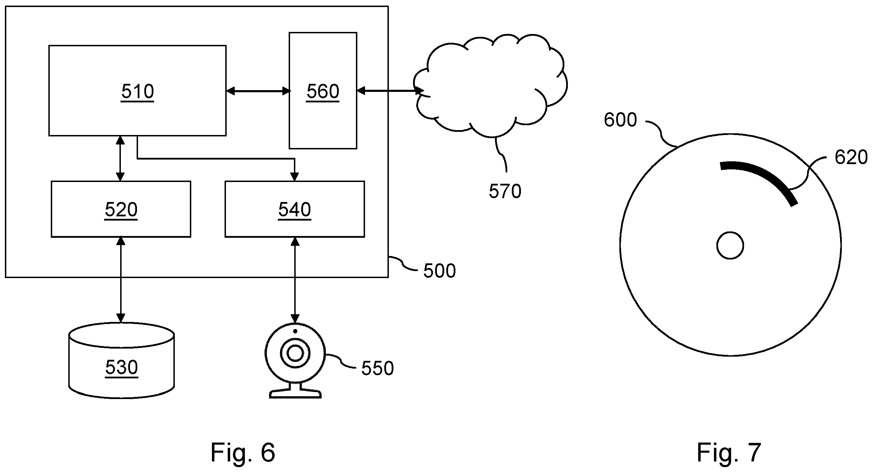

The following describes with reference to Figs. 1-2 a representation of a machine learned model in form of a computational graph, with reference to Figs. 3-4 a conversion of such a machine learned model to a binary intermediate representation which may be executable by a runtime interpreter on a plurality of different types of devices, with reference to Fig. 5 the deployment of the machine learned model to such a plurality of devices, and with reference to Fig. 6 a processor system and with reference to Fig. 7 a computer readable medium which may be used in embodiments according to the invention.

**Fig. 1** shows an example of an operation defined as a computational graph 80. In this example, nodes 'x1' and 'x2' may define inputs to the graph, the node 'add' may define an addition operation and the node 'sum' may define a summation operation. Moreover, the edges between nodes may define data relations between the operations. In the specific example of Fig. 1, the nodes 'x1' and 'x2' may each be connected by directional edges to the 'add' node, causing the 'add' node' to, during execution of the graph, add the data provided by the inputs 'x1' and 'x2'. Such data between nodes may take various forms, such as scalars, vectors, arrays, etc., and may in general be referred to as 'tensor data' or in short 'tensors'. In Fig. 1, as well as in the following Fig. 2, the dimensionality of the tensor data may be indicated in dashed boxes connected to each edge. Accordingly, it can be seen in Fig. 1 that the input tensors are each scalars and that the 'add' operation results in a(nother) scalar.

**Fig. 2** shows an example of a machine learnable model in form of a multi-layer neural network, which model is defined as a computational graph 102. In this example, the machine learnable model may be defined as a 7-layer neural network which may comprise an input layer 'in' for receiving a 1x10 tensor as input, followed by a first fully connected layer 'Gemm' which may implement a general matrix multiplication and which may be configured to provide an output tensor of 1x64, followed by a first activation function in form of a rectified linear unit 'Relu', followed by a second fully connected layer 'Gemm', followed by a second 'Relu' activation function, followed by a third fully connected layer 'Gemm', and finally an output layer 'out' providing a scalar as output. Note that B and C in the Gemm operator may be examples of constant tensors within the computational graph: the specific values of these constant tensors may be learned by training, while after training, these constant tensors may be encoded in the graph for inference. Such a machine learnable model may for example be used for data classification or regression, or in general for inference at runtime, and may be learnable in that various parameters of the multi-layer neural network, such as weights and biases of the network layers, may be learnable.

The machine learnable model in Fig. 2 may for example be defined in the ONXX format and using the ONXX syntax. For example, 'Gemm' may be the name of a ONXX operator representing a general matrix multiplication function. ONXX may define various operators which may allow a machine learnable model to be defined. Each operator may define a respective function of a machine learnable model. For example, a 'maxpool' operator may define a max pooling function. While the computational graph is shown graphically in Fig. 2, the computational graph is typically defined as code, which code may be human-readable. For example, ONXX uses a human-readable markup language.

It is noted that the training of a machine learnable model defined as computational graph is known per se, e.g., by using an ONXX runtime for training. For example, such training may involve selecting specific values of constants in the graph (e.g., the aforementioned B and C in the Gemm operator). In some examples, training may also comprise changing the graph itself (e.g., adding operations). It will be further appreciated that while the above and following refers to ONXX as an example of a format for defining computational graphs which in turn define machine learnable models, such machine learnable models may in general be represented mathematically as computational graphs, with the computational graphs being definable in any suitable manner, e.g., using any suitable computer language, format, or syntax. The invention as claimed is therefore not limited to the use of ONXX to define the computational graph. For example, the machine learned model may be defined in SkLearn or R instead of the ONXX format.

**Fig. 3** illustrates a process of converting, on the one hand, a machine learned model which is defined as a computational graph to, on the other hand, a binary intermediate representation which is executable by a runtime interpreter on a plurality of different types of devices. Fig. 3 may be explained as follows. A machine learned model 100 may be accessed in form of a computer-readable representation of a computational graph, as also described elsewhere in this specification. The machine learned model 100 may be converted into a binary intermediate representation which is executable by a runtime interpreter on the plurality of different types of devices. For that purpose, a template library 120 may be provided and accessed during or before the conversion. The template library 120 may define functions in a programming language which may be compiled to the binary intermediate representation. Each function may represent an implementation of a possible operation defined by the computational graph. The machine learned model 100 may be parsed 300 to identify the operations of the machine learned model and the data relations between the operations. Having parsed 300 the machine learned model 100, code may be dynamically generated which may represent the machine learned model, in that the code may, when compiled and executed by the runtime interpreter, apply the machine learned model to input data, e.g., to perform inference. The code may be dynamically generated by including functions from the library which represent the operations of the computational graph and by generating execution logic which calls the functions in accordance with the data relations between the operations in the computational graph. As a result, code 140 may be obtained, which code 140 may be compiled 340 to obtain the binary intermediate representation 160 of the machine learned model for execution by the runtime interpreter. The process shown in Fig. 3 may be carried out by a system, e.g., a processor system such as workstation or a server, which processor system may elsewhere also be referred to as 'compile server'.

In some examples, the parsing 300 of the computational graph may comprise verifying a validity of the computational graph before dynamically generating the code 140. If the computational graph is deemed not to be valid, the code 140 may not be generated. In some examples, the code 140 may be generated to omit external dependencies. In some examples, the code 140 may be generated be C99 (ISO/IEC 9899:1999) compliant code. In such examples, the template library may likewise be defined in C99, and the execution logic may be dynamically generated in C99. It will be appreciated, however, that the code 140 may also take any other suitable form provided that this form allows compilation into a binary intermediate representation. In some examples, the binary intermediate representation 160 may be a WebAssembly binary intermediate representation which may be executable by a WebAssembly runtime interpreter. For example, C99 code may be compiled to WebAssembly using Clang and a LLVM compiler backend, e.g., as available from https://github.com/IIvm/IIvm-project. In some examples, the WebAssembly binary intermediate representation may be generated to have a standard input/output (I/O) software interface, which may facilitate deployment across different devices and types of devices.

**Fig. 4** shows an application 200 which may be generated for a specific type of device. The application 200 may comprise a runtime interpreter 180 for the type of device and may comprise a binary intermediate representation 160 of a machine learned model, e.g., as generated by the process of Fig. 3. In other examples, the application 200 may be configured to access the binary intermediate representation 160 from elsewhere, e.g., from an internal storage of the device. In other words, the application 200 may not need to include the binary intermediate representation 160 but may access the binary intermediate representation 160 from elsewhere during execution of the application 200, e.g., from the internal storage of the device on which the application 200 is executed. As will be described elsewhere, in some examples, the application 200 may initially download the binary intermediate representation 160, e.g., from an online platform, onto the internal storage and subsequently access the binary intermediate representation 160 from the internal storage.

The application 200 may be configured to establish a sandbox for execution of the binary intermediate representation of the machine learned model on the device. In some examples, the application 200 may be configured to establish a linear memory space 220 which may be accessible from inside and outside of the sandbox. Such a linear memory space 220 may enable the binary intermediate representation 160 of the machine learned model to, upon execution by the runtime interpreter 180, access a peripheral 240 or hardware accelerator 260 by writing data to and/or reading data from the linear memory space. The hardware accelerator 260 may for example be a hardware accelerator of a CPU (Central Processing Unit) or MCU (Microcontroller) or SoC (System-on-Chip) of the device. In some examples, the hardware accelerator 260 may be, or may be part of, a GPU (Graphics Processing Unit) or NPU (Neural Processing Unit) of the device. The peripheral may for example be a (web)camera, a microphone, a motion sensor, an environmental sensor, etc., and may be an internal or external peripheral of the device. In case of an internal peripheral, the peripheral may also simply be referred to as an internal component of the device, e.g., an internal camera, internal microphone, etc. In some examples, the peripheral 240 may comprise a sensor, and the application may be configured to read sensor data from the peripheral 240 and to write the sensor data to the linear memory space 220 to enable the binary intermediate representation 160 to process the sensor data.

**Fig. 5** shows the deployment of machine learned models to different devices and to different types of devices via an online platform, with the online platform having access to machine learned models which are generated by a compile server. In particular, Fig. 5 shows a compile server 400 which may be configured to perform the process illustrated in Fig. 3 to generate a binary intermediate representation of a machine learned model, and in some examples, to generate an application which includes a runtime interpreter for a specific type of device. The binary intermediate representations of various machine learned models and the applications for the specific types of devices may be stored by the compile server 400 on a database 440. The applications may be made available for download via an online platform which may be hosted by an online platform host 420. The online platform host 420 may be accessible to a plurality of different devices and device types 480-484, for example via a network 460 such as the Internet. An application may be loaded onto a device 480-484 in various ways. For example, a user may manually load the application onto the device, e.g., by visiting a webpage hosted by the online platform host 420. Another example is that the device may provide a graphical user interface which may enable the user to request the device to directly download the application from the online platform, e.g., without having to visit a webpage. In yet other examples, the application may be pre-loaded or pushed on the device, e.g., using known techniques. Once loaded onto a device, the application may assign a unique device identifier to the device and register with the online platform using the unique device identifier. This unique device identifier may be any suitable identifier, such as a universally unique identifier (UUID) of the device, a media access control (MAC) address of a network interface of the device, or any other unique identifier of the device or device part. In some examples, the unique device identifier may be generated by the application, e.g., as a (pseudo)random identifier. In some examples, the unique device identifier may be an anonymized or pseudonymized device identifier.

Having registered with the online platform, machine learned models may be assigned to the device using the online platform on the basis of the unique device identifier. For example, the online platform host 420 may provide a webpage via which such an assignment may be performed, for example by selecting a device and selecting a machine learned model to be deployed onto the device. The application loaded onto the device may be configured to retrieve the binary intermediate representation of any machine learned model which may be assigned to the device from the online platform. For example, the application may periodically check with the online platform for assigned models, e.g., through a pull-type of interaction, or by the online platform pushing such machine learned models to devices. In some examples, machine learned models may be dynamically assigned to devices, for example to devices that have spare compute capacity. Such assignments may in general be based on rules which may be defined, e.g., by a user. Such rules may allow one machine learned model to be assigned to multiple devices, and vice versa, multiple machine learned models to be assigned to one device. In some examples, a virtual representation of a type of device may be used to estimate the performance of a machine learned model on the type of device, for example before actual deployment to a device. Such virtual representations may for example be stored on the database 440.

**Fig. 6** shows a processor system 500 which may represent any system or device described in this specification, including but not limited to a compile server, an online platform host, a device onto which a machine learned model is (to be) deployed, etc. The processor system 500 may comprise a data storage interface 520 for reading and/or writing any type of data described in this specification from and/or to a data storage 530. The data storage 530 may take various forms, such as a hard drive or an array of hard drives, a solid-state drive or an array of solid-state drives, a memory, etc. By way of example, Fig. 6 shows the data storage 530 to be an external data storage, but the data storage 530 may also be an internal component of the processor system 500. The processor system 500 may further comprise a network interface 560 to a network 570, such as a local area network (LAN) or a wide area network (WAN), such as the Internet. The network interface 560 may for example be a wired communication interface, such as an Ethernet or fiber-optic based interface, or a wireless communication interface, e.g., based on 5G, Wi-Fi, Bluetooth, ZigBee, etc. In yet other examples, the network interface 560 may be a virtual, software-based interface.

The processor system 500 may further comprise a processing subsystem 510 which may be configured, e.g., by hardware design or software, to perform the operations described in this specification in as far as pertaining to the entity that the processor system is embodying, e.g., the compile server, the online platform host, the device onto which the machine learned model is (to be) deployed, etc. In general, the processing subsystem 510 may be embodied by a single CPU, such as a x86 or ARM-based CPU, but also by a combination or system of such CPUs and/or other types of processing units, such as MCUs, GPUs, NPUs, etc. In embodiments where the processor system 500 is distributed over different entities, e.g., over different servers, the processing subsystem 510 may also be distributed, e.g., over the CPUs, MCUs, GPUs, NPUs, etc. of such different servers.

The processor system 500 may further comprise a peripheral interface 540 to a peripheral 550, such as a (web)camera, a microphone, an environmental sensor, etc. The processing subsystem 510 may communicate with the peripheral 550 via the peripheral interface 540, for example to receive sensor data from the peripheral. In a specific example, the processing subsystem 510 may access image, video and/or audio data recorded by a (web)camera, or access any other type of sensor data from any other type of sensor. Such sensor data may for example be processed by a binary intermediate representation of a machine learned model using a runtime interpreter running on the processor system 500.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. Each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 600 as for example shown in Fig. 7, e.g., in the form of a series 610 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc. Fig. 7 shows by way of example an optical storage device 600.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for enabling deployment of a machine learned model to a plurality of different types of devices, comprising:
- providing a representation of the machine learned model in form of a computational graph, wherein nodes of the computational graph define operations of the machine learned model and edges of the computational graph define data relations between the operations;
- converting the machine learned model to a binary intermediate representation which is executable by a runtime interpreter on the plurality of different types of devices by:
- providing a library of templates defining functions in a programming language which can be compiled to the binary intermediate representation, wherein each function represents an implementation of a possible operation defined by the computational graph;
- parsing the computational graph to identify the operations of the machine learned model and the data relations between the operations;
- dynamically generating code representing the machine learned model by including functions from the library which represent the operations of the computational graph and by generating execution logic which calls the functions in accordance with the data relations between the operations in the computational graph;
- compiling the code to obtain the binary intermediate representation of the machine learned model for execution by the runtime interpreter.

2. The method according to claim 1, wherein the computational graph is defined in ONXX format.

3. The method according to claim 1 or 2, wherein the binary instruction format is WebAssembly.

4. The method according to any one of claims 1 to 3, wherein parsing the computational graph comprises verifying a validity of the computational graph before dynamically generating the code.

5. The method according to any one of claims 1 to 4, further comprising generating an application for a specific type of a device, wherein the application includes the runtime interpreter and includes, or is configured to access, the binary intermediate representation of the machine learned model.

6. The method according to claim 5, wherein the application is configured to establish a sandbox for execution of the binary intermediate representation of the machine learned model on the device.

7. The method according to claim 6, wherein the application is configured to provide a linear memory space which is accessible from inside and outside of the sandbox to enable the binary intermediate representation of the machine learned model to access a peripheral or hardware accelerator of the device by writing data to and/or reading data from the linear memory space.

8. The method according to claim 7, wherein the peripheral comprises a sensor, and wherein the application is configured to:
- read sensor data from the peripheral; and
- write the sensor data to the linear memory space to be accessible by the binary intermediate representation of the machine learned model.

9. The method according to any one of claims 5 to 8, further comprising making the application available for download via an online platform, wherein the application is configured to assign a unique device identifier to the device and register with the online platform using the unique device identifier.

10. The method according to claim 9, further comprising enabling a user to, via the online platform, assign one or more machine learned models to the device, wherein said assignment is based on the unique device identifier, and wherein the application is configured to retrieve the binary intermediate representation of any machine learned model which is assigned to the device from the online platform.

11. A transitory or non-transitory computer-readable medium comprising data, wherein the data comprises instructions arranged to cause a processor system to perform the computer-implemented method according to any one of claims 1 to 10.

12. A transitory or non-transitory data computer-readable medium comprising data, wherein the data represents an application generated by the computer-implemented method according to any one of claims 5 to 10.

13. A system for enabling deployment of a machine learned model to a plurality of different types of devices, comprising:
- a data storage interface for accessing a representation of the machine learned model in form of a computational graph, wherein nodes of the computational graph define operations of the machine learned model and edges of the computational graph define data relations between the operations;
- a processor subsystem configured to:
convert the machine learned model to a binary intermediate representation which is executable by a runtime interpreter on the plurality of different types of devices by:
provide a library of templates defining functions in a programming language which can be compiled to a binary instruction format, wherein each function represents an implementation of a possible operation defined by the computational graph;
parse the computational graph to identify the operations of the machine learned model and the data relations between the operations;
dynamically generate code representing the machine learned model by including functions from the library which represent the operations of the computational graph and by generating execution logic which calls the functions in accordance with the data relations between the operations in the computational graph;
compile the code to obtain the binary intermediate representation of the machine learned model for execution by the runtime interpreter.

14. The system according to claim 13, further comprising a network interface to a network, wherein the processor subsystem is configured to:
- generate an application for a specific type of a device, wherein the application includes the runtime interpreter and includes, or is configured to access, the binary intermediate representation of the machine learned model; and
- via the network interface, make the application available for download via an online platform, wherein the application is configured to assign a unique device identifier to the device and register with the online platform using the unique device identifier.

15. The system according to claim 14, wherein the processor subsystem is configured to enable a user to, via the online platform, assign one or more machine learned models to the device, wherein said assignment is based on the unique device identifier, and wherein the application is configured to retrieve the binary intermediate representation of any machine learned model which is assigned to the device from the online platform.
